(19) Europäisches Patentamt / European Patent Office / Office européen des brevets

(11) **EP 3 937 448 A1**

(12) **EUROPEAN PATENT APPLICATION**

(43) Date of publication:
**12.01.2022 Bulletin 2022/02**

(51) Int Cl.:
*H04L 27/26* (2006.01)          *H04B 7/12* (2006.01)

(21) Application number: **21184460.0**

(22) Date of filing: **08.07.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.07.2020   US 202063049718 P**
**05.07.2021   US 202117367588**

(71) Applicant: **MediaTek Singapore Pte. Ltd.**
**Singapore 138628 (SG)**

(72) Inventors:
• **ANWYL, Gary A.**
**San Jose, 95134 (US)**
• **LIU, Jianhan**
**San Jose, 95134 (US)**
• **HU, Shengquan**
**San Jose, 95134 (US)**
• **PARE, Jr., Thomas Edward**
**San Jose, 95134 (US)**

(74) Representative: **Hoefer & Partner Patentanwälte mbB**
**Pilgersheimer Straße 20**
**81543 München (DE)**

(54) **LOW PAPR DUPLICATED DUAL CARRIER MODULATION FOR BPSK IN WIRELESS COMMUNICATIONS**

(57)     Dual carrier modulation, DCM, encoded data is generated in a first half of a full signal bandwidth (510). The DCM encoded data generated in the first half of the full signal bandwidth is duplicated in a second half of the full signal bandwidth (520). The duplicated DCM encoded data in the second half of the full signal bandwidth is multiplied by a modulation vector to result in a reduced peak-to-average power ratio, PAPR, in transmission (530).

FIG. 5

**Description**

**CROSS REFERENCE TO RELATED PATENT APPLICATION**

The present disclosure is part of a non-provisional patent application claiming the priority benefit of U.S. Provisional Patent Application No. 63/049,718, filed on 09 July 2020, the content of which being incorporated by reference in its entirety.

**TECHNICAL FIELD**

The present disclosure is generally related to wireless communications and, more particularly, to low peak-to-average power ratio (PAPR) duplicated dual carrier modulation for binary phase-shift keying (BPSK) in wireless communications.

**BACKGROUND**

Unless otherwise indicated herein, approaches described in this section are not prior art to the claims listed below and are not admitted as prior art by inclusion in this section.

In wireless communications such as those carried out in wireless local area networks (WLANs) based on the Institute of Electrical and Electronics Engineers (IEEE) 802.11 standards such as IEEE 802.11ax and IEEE 802.11be, data can be encoded using BPSK and modulated using dual carrier modulation (DCM) for transmission on two subcarriers. In the specification of IEEE 802.11be, a duplication scheme is further defined on top of DCM. That is, in an extreme-high-throughput (EHT) WLAN based on the IEEE 802.11be draft standard, a packet (e.g., a physical-layer protocol data unit (PPDU)) is duplicated in a duplicate mode over a larger bandwidth. For example, a 40-MHz packet can be encoded then duplicated to fill an 80-MHz bandwidth. This is intended to further extend the range of the WLAN and allow for a higher transmit (Tx) power in power spectral density (PSD)-limited frequency bands such as the 6-GHz low-power indoor (LPI) band. However, under current duplication schemes, an increased PAPR tends to result, thereby causing more signal distortion and requiring a transmitter to reduce the average transmit power in order to reduce the peak power of a transmitted signal. Therefore, there is a need for a solution to allow reduced or low PAPR duplication over DCM in WLANs.

**SUMMARY**

The following summary is illustrative only and is not intended to be limiting in any way. That is, the following summary is provided to introduce concepts, highlights, benefits and advantages of the novel and non-obvious techniques described herein. Select implementations are further described below in the detailed description. Thus, the following summary is not intended to identify essential features of the claimed subject matter, nor is it intended for use in determining the scope of the claimed subject matter.

An objective of the present disclosure is to provide schemes, concepts, designs, techniques, methods and apparatuses pertaining to low PAPR duplicated dual carrier modulation for BPSK in wireless communications. Under various proposed schemes in accordance with the present disclosure, it is believed that aforementioned issue may be addressed. Methods and devices according to the invention are defined in the independent claims. The dependent claims define preferred embodiments thereof.

In one aspect, a method may involve encoding data using DCM. The method may also involve modulating the encoded data to result in a reduced PAPR in transmission of the modulated and encoded data in a wireless network.

In another aspect, a method may involve generating DCM encoded data in a first half of a full signal bandwidth. The method may also involve duplicating in a second half of the full signal bandwidth the DCM encoded data generated in the first half of the full signal bandwidth. The method may further involve multiplying the duplicated DCM encoded data in the second half of the full signal bandwidth by a modulation vector to result in a reduced PAPR in transmission.

In yet another aspect, an apparatus may include a transceiver configured to communicate wirelessly and a processor coupled to the transceiver. The processor may generate DCM encoded data in a first half of a full signal bandwidth. The processor may also duplicate in a second half of the full signal bandwidth the DCM encoded data generated in the first half of the full signal bandwidth. The processor may further multiply the duplicated DCM encoded data in the second half of the full signal bandwidth by a modulation vector to result in a reduced PAPR in transmission.

It is noteworthy that, although description provided herein may be in the context of certain radio access technologies, networks and network topologies such as, Wi-Fi, the proposed concepts, schemes and any variation(s)/derivative(s) thereof may be implemented in, for and by other types of radio access technologies, networks and network topologies such as, for example and without limitation, Bluetooth, ZigBee, 5th Generation (5G)/New Radio (NR), Long-Term Evolution (LTE), LTE-Advanced, LTE-Advanced Pro, Internet-of-Things (IoT), Industrial IoT (IIoT) and narrowband IoT (NB-IoT). Thus, the scope of the present disclosure is not limited to the examples described herein.

## BRIEF DESCRIPTION OF THE DRAWINGS

The accompanying drawings are included to provide a further understanding of the disclosure and are incorporated in and constitute a part of the present disclosure. The drawings illustrate implementations of the disclosure and, together with the description, serve to explain the principles of the disclosure. It is appreciable that the drawings are not necessarily in scale as some components may be shown to be out of proportion than the size in actual implementation to clearly illustrate the concept of the present disclosure.

FIG. 1 is a diagram of an example network environment in which various solutions and schemes in accordance with the present disclosure may be implemented.
FIG. 2 is a diagram of an example scenario in accordance with an implementation of the present disclosure.
FIG. 3 is a block diagram of an example communication system in accordance with an implementation of the present disclosure.
FIG. 4 is a flowchart of an example process in accordance with an implementation of the present disclosure.
FIG. 5 is a flowchart of an example process in accordance with an implementation of the present disclosure.

## DETAILED DESCRIPTION OF PREFERRED EMBODIMENTS

Detailed embodiments and implementations of the claimed subject matters are disclosed herein. However, it shall be understood that the disclosed embodiments and implementations are merely illustrative of the claimed subject matters which may be embodied in various forms. The present disclosure may, however, be embodied in many different forms and should not be construed as limited to the exemplary embodiments and implementations set forth herein. Rather, these exemplary embodiments and implementations are provided so that description of the present disclosure is thorough and complete and will fully convey the scope of the present disclosure to those skilled in the art. In the description below, details of well-known features and techniques may be omitted to avoid unnecessarily obscuring the presented embodiments and implementations.

### *Overview*

Implementations in accordance with the present disclosure relate to various techniques, methods, schemes and/or solutions pertaining to low PAPR duplicated dual carrier modulation for BPSK in wireless communications. According to the present disclosure, a number of possible solutions may be implemented separately or jointly. That is, although these possible solutions may be described below separately, two or more of these possible solutions may be implemented in one combination or another. It is noteworthy that, although examples described herein and illustrated in the figures may show a first resource unit (RU) of size A and a second RU of size B, as in RU A + RU B, various proposed schemes in accordance with the present disclosure may be implemented with RU A + RU B, or vice versa (e.g., RU B + RU A). In other words, the scope of the present disclosure is not limited to the examples presented herein and, rather, also covers variations thereof. For instance, for a multi-RU group (996 + 484), the order of RUs may be exchanged in different implementations such as, for example, a first RU of size 484 plus a second RU of size 996 in one implementation or, alternatively, a first RU of size 996 plus a second RU of size 484 in another implementation.

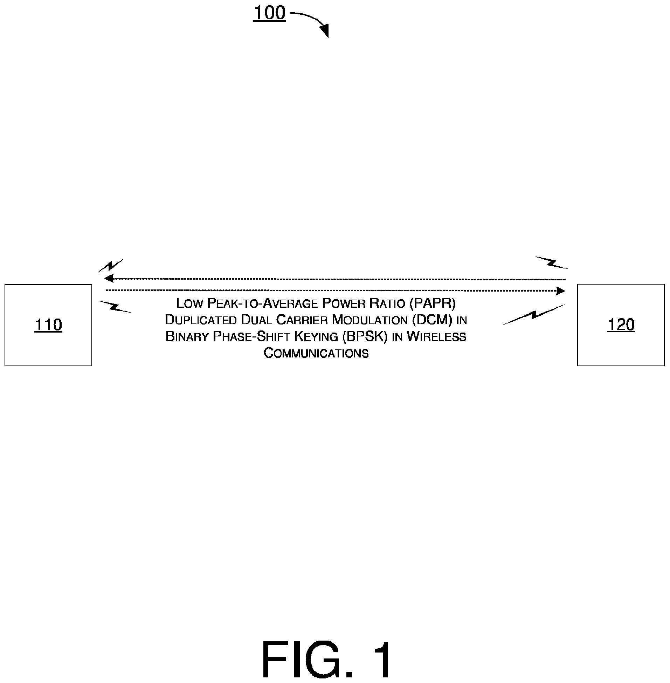

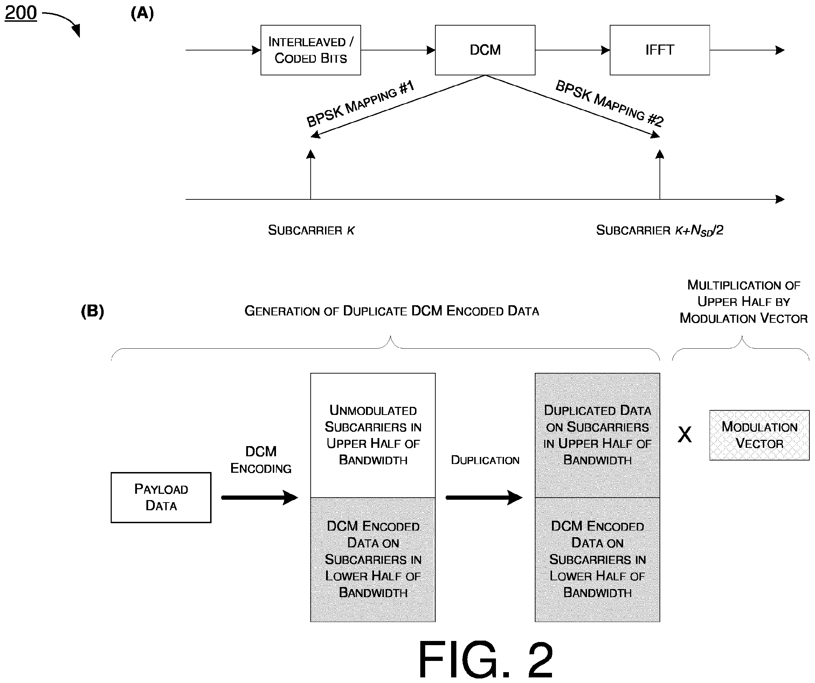

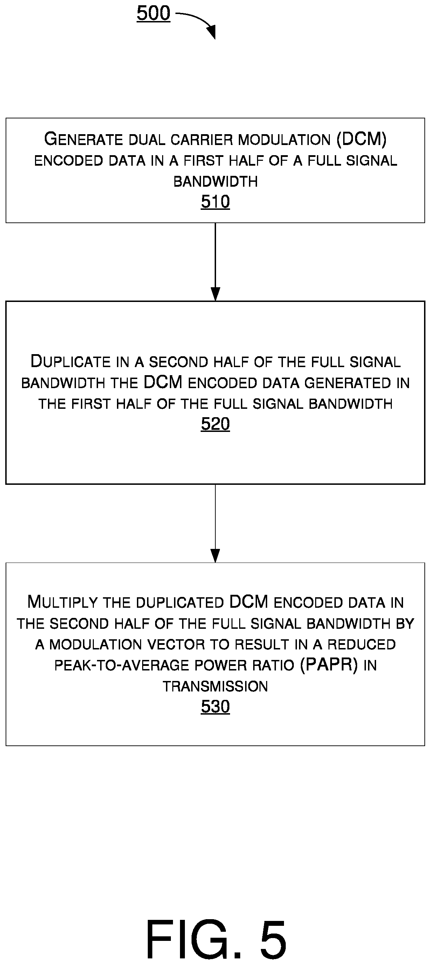

FIG. 1 illustrates an example network environment 100 in which various solutions and schemes in accordance with the present disclosure may be implemented. FIG. 2 ∼ FIG. 5 illustrate examples of implementation of various proposed schemes in network environment 100 in accordance with the present disclosure. The following description of various proposed schemes is provided with reference to FIG. 1 ∼ FIG. 5.

Referring to FIG. 1, network environment 100 may involve a communication entity 110 and a communication entity 120 communicating wirelessly (e.g., in a WLAN in accordance with one or more IEEE 802.11 standards). For instance, communication entity 110 may be a first station (STA) and communication entity 120 may be a second STA, with each of the first STA and second STA being an access point (AP) or a non-AP STA. Under various proposed schemes in accordance with the present disclosure, communication entity 110 and communication entity 120 may be configured to perform low PAPR duplicated dual carrier modulation for BPSK in wireless communications, as described herein.

FIG. 2 illustrates an example scenario 200 of low PAPR duplicated dual carrier modulation for BPSK in wireless communications in accordance with an implementation of the present disclosure. Referring to part (A) of FIG. 2, a modulation and coding scheme (MCS), referred to as "DCM + MCS0", may be utilized, such that signals $s_k$ and $S_{k+Nsd/2}$ are modulated for data subcarrier k and $k+N_{SD}/2$ for DCM as follows:

$$s_{k+N_{SD}/2} = s_k e^{j(k+N_{SD}/2)\pi}$$

As DCM introduces frequency diversity and extends the range of the WLAN, through this operation, the PAPR of an orthogonal frequency-division multiplexing (OFDM) signal may be significantly reduced. As shown in part (A) of FIG. 2, data bits may be first interleaved or otherwise coded before being DCM encoded and converted from the frequency domain to the time domain by Inverse Fast Fourier Transform (IFFT). The DCM encoding may, using BPSK, result in the encoded data bits being mapped to subcarrier $k$ and subcarrier $k+N_{SD}/2$.

In next-generation WLANs such as those based on IEEE 802.11be and beyond, MCS 14 or 15 may be used for DCM + MCS0. Within each 80-MHz frequency segment, transmission with DCM may involve applying joint interleaving on a first half and a second half of data tones of the entire aggregated RU respectively. For example, a joint leaver may be applied to different aggregated RUs for DCM such as, for example, RU(52 + 76) = RU78, RU(106 + 26) = RU132, and RU(242 + 484) = RU726. For 160-MHz and 320-MHz transmission and other aggregated RUs that cross a boundary between two adjacent 80-MHz frequency segments, such as RU(484 + 996), RU(242 + 484 + 996) and RU(996 + 996 + 484), DCM may be applied on each RU or on the aggregated RU within each 80-MHz frequency segment.

Referring to part (B) of FIG. 2, scenario 200 may involve two main stages to achieve low PAPR duplicated dual carrier modulation for BPSK in wireless communications, namely: (1) generation of duplicate DCM encoded data, and (2) multiplication of one half (e.g., upper half) of a full signal bandwidth by a modulation vector M($k$). In the first stage (generation of duplicate DCM encoded data), certain operations may be performed. Firstly, DCM encoding may be performed in that payload data may be encoded by DCM encoding the payload data on one or more data subcarriers in one or more RUs a lower half (or an upper half) of a full signal bandwidth. Secondly, duplication may be performed in that the DCM encoded data on the one or more data subcarriers in the lower half may be duplicated in the upper half of the full signal bandwidth. In the second stage (multiplication), the duplicated one or more data subcarriers in the upper half (or the lower half) of the full signal bandwidth may be multiplied by the modulation vector M($k$).

Under a proposed scheme in accordance with the present disclosure with respect to PAPR-reduced duplication over DCM for EHT transmissions, data to be transmitted may be encoded on subcarriers in one half of a given frequency band using DCM to generate DCM-modulated data. Then, the DCM-modulated data may be duplicated in the other half of the frequency band. Next, a frequency domain-to-time domain conversion or transformation may be performed. For instance, data for an RU996 in a 160-MHz frequency band may be encoded in subcarriers [-1012 : -12] using DCM modulation, and the DCM-modulated data may be duplicated in subcarriers [12 : 1012]. Although duplicating the data-carrying signal tends to increase the PAPR thereof, a modulation may be applied on the duplicated signal to reduce the PAPR. There may be several approaches to modulations for PAPR reduction, as described below.

Under the proposed scheme with respect to modulations for PAPR reduction, there may be certain assumptions for the several approaches. One assumption may be that subcarriers are numbered as [-$nfft$ / 2 : $nfft$ / 2 - 1]. Throughout the present disclosure, the parameter $nfft$ denotes a length of an IFFT used to create the time domain signal or otherwise used to transform the frequency domain representation into the time domain signal. Another assumption may be that data is encoded on subcarriers within [-$nfft$ / 2 : -1] and duplicated on subcarriers within [0 : $nfft$ / 2 - 1]. A further assumption may be that the duplicated subcarriers within [0 : $nfft$ / 2 - 1] are modulated by multiplying with a modulation vector M($k$), where k denotes an index of a respective duplicated subcarrier.

Under aforementioned assumptions, a first approach under the proposed scheme to achieve modulations for PAPR reduction may be denoted as "no modulation" and mathematically expressed as follows:

$$M(k) = 1 \text{ for all } k$$

Under aforementioned assumptions, a second approach under the proposed scheme to achieve modulations for PAPR reduction may be denoted as "half -1/1" and mathematically expressed as follows:

$$M(k) = -1 \text{ for } k = [0 : nfft / 4], \; M(k) = 1 \text{ for } k = [nfft / 4 + 1 : nfft / 2 - 1].$$

Under aforementioned assumptions, a third approach under the proposed scheme to achieve modulations for PAPR reduction may be denoted as "alternating +/-1" and mathematically expressed as follows:

$$M(k) = \exp(k * j * \pi)$$

Under aforementioned assumptions, a fourth approach under the proposed scheme to achieve modulations for PAPR reduction may be denoted as "Cyclic Shift Diversity" or "CSD" and mathematically expressed as follows:

$$M(k) = \exp(k * N * \pi * j / nfft) \text{ for } N > 2$$

Under aforementioned assumptions, a fifth approach under the proposed scheme to achieve modulations for PAPR reduction may be denoted as "scrambled +/-1" and mathematically expressed as follows:

$$M(k) = 2 * S(k) - 1 \text{ where } S = \text{a pseudorandom sequence of 0s and 1s}$$

where S = a pseudorandom sequence of 0s and 1s

Under the proposed scheme, in an OFDM WLAN system, a duplicate DCM data may be encoded to produce a duplicate DCM encoded signal. For instance, the encoding may performed by DCM encoding the payload of the data onto data subcarriers in one or more RUs that encompasses a lower half (or an upper half) of a full signal bandwidth. Then, the DCM encoded data on data subcarriers in the lower half may be duplicated in the upper half of the full signal bandwidth. Next, a modulation vector M($k$) may be created or otherwise generated using one of the above-described approaches. Subsequently, the duplicated subcarriers in the upper half (or the lower half) of the full signal bandwidth may be multiplied with the modulation vector M($k$).

In view of the above, in terms of frequency-domain duplication, for an EHT multi-user (MU) PPDU transmitted to a single user with EHT-MCS 14, the output of a segment de-parser, $d_{k,m,n,r,u}$, may be further duplicated to map to two RUs (e.g., RU1 and RU2) according to the following expressions:

$$\tilde{d}_{k,m,n,r,u} = d_{k,m,n,r,u}, \qquad 0 \le k \le 2N_{SD,u} - 1$$

$$\tilde{d}_{k,m,n,r+1,u} = \begin{cases} -d_{k,m,n,r,u}, & 0 \le k \le N_{SD,u} - 1 \\ d_{k,m,n,r,u}, & N_{SD,u} \le k \le 2N_{SD,u} - 1 \end{cases}$$

Here, $m = 1$, $n = 0, .., N_{SYM} - 1$, $r = 0$ since EHT-MCS 14 is only supported for single-user (SU) transmission, $u = 0$ since EHT-MCS 14 is only supported for SU transmission, $N_{SD,u}$ is the number of data subcarriers, and $N_{SYM}$ is the number of data symbols in the PPDU. Moreover, $\tilde{d}_{k,m,n,r,u}$ maps to data subcarriers in RU1 and $\tilde{d}_{k,m,n,r+1,u}$ maps to data subcarriers in RU2, where RU1 and RU2 may correspond to 484-tone RUs for an 80-MHz PPDU, 996-tone RUs for a 160-MHz PPDU, or 2x996-tone RUs for a 320-MHz PPDU. Furthermore, for an EHT PPDU that is not encoded with EHT-MCS 14, frequency-domain duplication may not be performed.

*Illustrative Implementations*

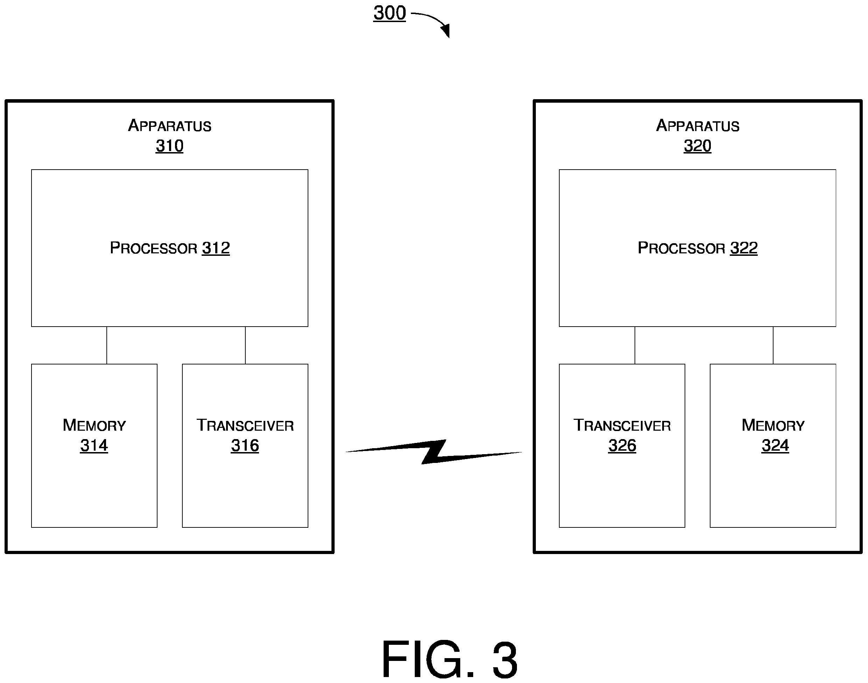

FIG. 3 illustrates an example system 300 having at least an example apparatus 310 and an example apparatus 320 in accordance with an implementation of the present disclosure. Each of apparatus 310 and apparatus 320 may perform various functions to implement schemes, techniques, processes and methods described herein pertaining to low PAPR duplicated dual carrier modulation for BPSK in wireless communications, including the various schemes described above with respect to various proposed designs, concepts, schemes, systems and methods described above as well as processes described below. For instance, apparatus 310 may be an example implementation of communication entity 110, and apparatus 320 may be an example implementation of communication entity 120.

Each of apparatus 310 and apparatus 320 may be a part of an electronic apparatus, which may be a STA or an AP, such as a portable or mobile apparatus, a wearable apparatus, a wireless communication apparatus or a computing apparatus. For instance, each of apparatus 310 and apparatus 320 may be implemented in a smartphone, a smart watch, a personal digital assistant, a digital camera, or a computing equipment such as a tablet computer, a laptop computer or a notebook computer. Each of apparatus 310 and apparatus 320 may also be a part of a machine type apparatus, which may be an IoT apparatus such as an immobile or a stationary apparatus, a home apparatus, a wire communication apparatus or a computing apparatus. For instance, each of apparatus 310 and apparatus 320 may be implemented in a smart thermostat, a smart fridge, a smart door lock, a wireless speaker or a home control center. When implemented in or as a network apparatus, apparatus 310 and/or apparatus 320 may be implemented in a network node, such as an AP in a WLAN.

In some implementations, each of apparatus 310 and apparatus 320 may be implemented in the form of one or more integrated-circuit (IC) chips such as, for example and without limitation, one or more single-core processors, one or more multi-core processors, one or more reduced-instruction set computing (RISC) processors, or one or more complex-instruction-set-computing (CISC) processors. In the various schemes described above, each of apparatus 310 and apparatus 320 may be implemented in or as a STA or an AP. Each of apparatus 310 and apparatus 320 may include at least some of those components shown in FIG. 3 such as a processor 312 and a processor 322, respectively, for example. Each of apparatus 310 and apparatus 320 may further include one or more other components not pertinent to the proposed scheme of the present disclosure (e.g., internal power supply, display device and/or user interface device), and, thus, such component(s) of apparatus 310 and apparatus 320 are neither shown in FIG. 3 nor described below in the interest of simplicity and brevity.

In one aspect, each of processor 312 and processor 322 may be implemented in the form of one or more single-core processors, one or more multi-core processors, one or more RISC processors or one or more CISC processors. That is, even though a singular term "a processor" is used herein to refer to processor 312 and processor 322, each of processor 312 and processor 322 may include multiple processors in some implementations and a single processor in other implementations in accordance with the present disclosure. In another aspect, each of processor 312 and processor 322 may be implemented in the form of hardware (and, optionally, firmware) with electronic components including, for example and without limitation, one or more transistors, one or more diodes, one or more capacitors, one or more resistors, one or more inductors, one or more memristors and/or one or more varactors that are configured and arranged to achieve specific purposes in accordance with the present disclosure. In other words, in at least some implementations, each of processor 312 and processor 322 is a special-purpose machine specifically designed, arranged and configured to perform specific tasks including those pertaining to low PAPR duplicated dual carrier modulation for BPSK in wireless communications in accordance with various implementations of the present disclosure. For instance, each of processor 312 and processor 322 may be configured with hardware components, or circuitry, implementing one, some or all of the examples described and illustrated herein.

In some implementations, apparatus 310 may also include a transceiver 316 coupled to processor 312. Transceiver 316 may be capable of wirelessly transmitting and receiving data. In some implementations, apparatus 320 may also include a transceiver 326 coupled to processor 322. Transceiver 326 may include a transceiver capable of wirelessly transmitting and receiving data.

In some implementations, apparatus 310 may further include a memory 314 coupled to processor 312 and capable of being accessed by processor 312 and storing data therein. In some implementations, apparatus 320 may further include a memory 324 coupled to processor 322 and capable of being accessed by processor 322 and storing data therein. Each of memory 314 and memory 324 may include a type of random-access memory (RAM) such as dynamic RAM (DRAM), static RAM (SRAM), thyristor RAM (T-RAM) and/or zero-capacitor RAM (Z-RAM). Alternatively, or additionally, each of memory 314 and memory 324 may include a type of read-only memory (ROM) such as mask ROM, programmable ROM (PROM), erasable programmable ROM (EPROM) and/or electrically erasable programmable ROM (EEPROM). Alternatively, or additionally, each of memory 314 and memory 324 may include a type of non-volatile random-access memory (NVRAM) such as flash memory, solid-state memory, ferroelectric RAM (FeRAM), magnetoresistive RAM (MRAM) and/or phase-change memory.

Each of apparatus 310 and apparatus 320 may be a communication entity capable of communicating with each other using various proposed schemes in accordance with the present disclosure. For illustrative purposes and without limitation, a description of capabilities of apparatus 310, as communication entity 110, and apparatus 320, as communication entity 120, is provided below. It is noteworthy that, although the example implementations described below are provided in the context of WLAN, the same may be implemented in other types of networks. Thus, although the following description of example implementations pertains to a scenario in which apparatus 310 functions as a transmitting device and apparatus 320 functions as a receiving device, the same is also applicable to another scenario in which apparatus 310 functions as a receiving device and apparatus 320 functions as a transmitting device.

Under a proposed scheme in accordance with the present disclosure with respect to low PAPR duplicated dual carrier modulation for BPSK in wireless communications, processor 312 of apparatus 310 may encode data using duplicated DCM. Additionally, processor 312 may modulate the encoded data to result in a reduced PAPR in transmission of the modulated and encoded data in a wireless network.

In some implementations, in encoding the data using the duplicated DCM, processor 312 may perform certain operations. For instance, processor 312 may perform DCM encoding on a payload of the data on one or more subcarriers in a RU in a first half of a full signal bandwidth. Additionally, processor 312 may duplicate the DCM encoded payload on one or more subcarriers in a second half of the full signal bandwidth.

In some implementations, in modulating the encoded data, processor 312 may multiply the duplicated DCM encoded payload in the second half of the full signal bandwidth by a modulation vector.

In some implementations, in modulating the encoded data, processor 312 may further generate the modulation vector, M($k$), by: (i) setting M($k$) to -1 for $k$ = [0 : $nfft$ / 4]; and (ii) setting M($k$) to 1 for k = [$nfft$ / 4 + 1 : $nfft$ / 2 - 1]. Here, *nfft* may denote a length of IFFT, *k* may denote an index of a respective one of the one or more subcarriers in the second half of the full signal bandwidth, the one or more subcarriers in each half of the full signal bandwidth may be numbered as [-*nfft* / 2 : *nfft* / 2 - 1], and the data may be encoded on subcarriers within *[-nfft* / 2 : -1] and duplicated on subcarriers within [0 : *nfft* / 2 - 1].

Alternatively, in modulating the encoded data, processor 312 may further generate the modulation vector, M(*k*), by setting M(*k*) = exp(k * *j* * $\pi$).

In some implementations, processor 312 may also transmit, via transceiver 316, the modulated and encoded data in the wireless network which comprises an EHT WLAN.

Under a proposed scheme in accordance with the present disclosure with respect to low PAPR duplicated dual carrier modulation for BPSK in wireless communications, processor 312 of apparatus 310 may generate DCM encoded data in a first half of a full signal bandwidth. Moreover, processor 312 may duplicate, in a second half of the full signal bandwidth, the DCM encoded data generated in the first half of the full signal bandwidth. Furthermore, processor 312 may multiply the duplicated DCM encoded data in the second half of the full signal bandwidth by a modulation vector to result in a reduced PAPR in transmission.

In some implementations, in generating the DCM encoded data processor 312 may perform DCM encoding on a payload of the data on one or more subcarriers in a RU in the first half of the full signal bandwidth. In some implementations, in duplicating in the second half of the full signal bandwidth, processor 312 may duplicate the DCM encoded payload on one or more subcarriers in a second half of the full signal bandwidth.

In some implementations, processor 312 may also generate the modulation vector, M(*k*), by: (i) setting M(*k*) to -1 for *k* = [0 : *nfft* / 4]; and (ii) setting M(*k*) to 1 for k = [*nfft* / 4 + 1 : *nfft* / 2 - 1]. Here, *nfft* may denote a length of IFFT, *k* may denote an index of a respective one of the one or more subcarriers in the second half of the full signal bandwidth, the one or more subcarriers in each half of the full signal bandwidth may be numbered as *[-nfft* / 2 : *nfft* / 2 - 1], and the data may be encoded on subcarriers within [-*nfft* / 2 : -1] and duplicated on subcarriers within [0 : *nfft* / 2 - 1].

Alternatively, processor 312 may also generate the modulation vector, M(*k*), by setting M(*k*) = exp(*k* * *j* * $\pi$).

In some implementations, processor 312 may also transmit, via transceiver 316, an outcome of the multiplying in an EHT WLAN.

*Illustrative Processes*

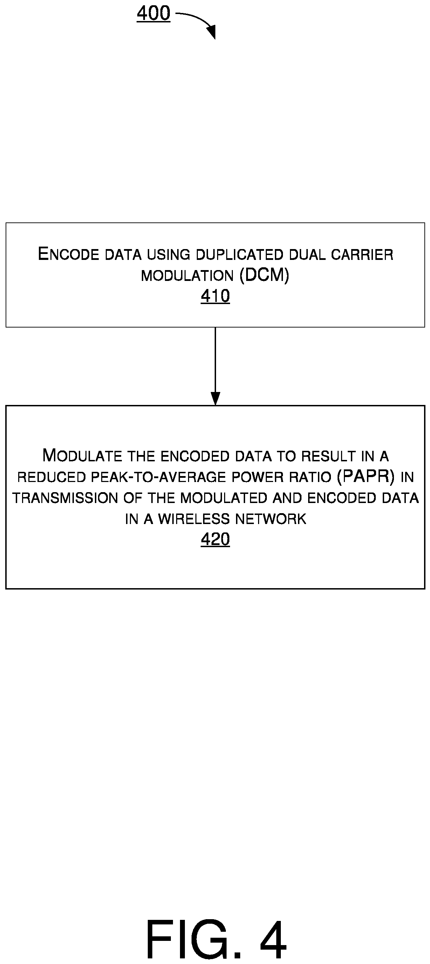

FIG. 4 illustrates an example process 400 in accordance with an implementation of the present disclosure. Process 400 may represent an aspect of implementing various proposed designs, concepts, schemes, systems and methods described above. More specifically, process 400 may represent an aspect of the proposed concepts and schemes pertaining to low PAPR duplicated dual carrier modulation for BPSK in wireless communications in accordance with the present disclosure. Process 400 may include one or more operations, actions, or functions as illustrated by one or more of blocks 410 and 420. Although illustrated as discrete blocks, various blocks of process 400 may be divided into additional blocks, combined into fewer blocks, or eliminated, depending on the desired implementation. Moreover, the blocks/sub-blocks of process 400 may be executed in the order shown in FIG. 4 or, alternatively in a different order. Furthermore, one or more of the blocks/sub-blocks of process 400 may be executed repeatedly or iteratively. Process 400 may be implemented by or in apparatus 310 and apparatus 320 as well as any variations thereof. Solely for illustrative purposes and without limiting the scope, process 400 is described below in the context of apparatus 310 as communication entity 110 (e.g., a transmitting device whether a STA or an AP) and apparatus 320 as communication entity 120 (e.g., a receiving device whether a STA or an AP) of a wireless network such as a WLAN in accordance with one or more of IEEE 802.11 standards. Process 400 may begin at block 410.

At 410, process 400 may involve processor 312 of apparatus 310 encoding data using duplicated DCM. Process 400 may proceed from 410 to 420.

At 420, process 400 may involve processor 312 modulating the encoded data to result in a reduced PAPR in transmission of the modulated and encoded data in a wireless network.

In some implementations, in encoding the data using the duplicated DCM, process 400 may involve processor 312 performing certain operations. For instance, process 400 may involve processor 312 performing DCM encoding on a payload of the data on one or more subcarriers in a RU in a first half of a full signal bandwidth. Additionally, process 400 may involve processor 312 duplicating the DCM encoded payload on one or more subcarriers in a second half of the full signal bandwidth.

In some implementations, in modulating the encoded data, process 400 may involve processor 312 multiplying the duplicated DCM encoded payload in the second half of the full signal bandwidth by a modulation vector.

In some implementations, in modulating the encoded data, process 400 may further involve processor 312 generating the modulation vector, M(*k*), by: (i) setting M(*k*) to -1 for *k* = [0 : *nfft* / 4]; and (ii) setting M(*k*) to 1 for *k* = *[nfft* / 4 + 1 : *nfft* / 2 - 1]. Here, *nfft* may denote a length of IFFT, *k* may denote an index of a respective one of the one or more subcarriers in the second half of the full signal bandwidth, the one or more subcarriers in each half of the full signal bandwidth may be numbered as [-$nfft$ / 2 : $nfft$ / 2 - 1], and the data may be encoded on subcarriers within [-$nfft$ / 2 : -1] and duplicated on subcarriers within [0 : $nfft$ / 2 - 1].

Alternatively, in modulating the encoded data, process 400 may further involve processor 312 generating the modulation vector, M($k$), by setting M($k$) = exp($k * j * \pi$).

In some implementations, process 400 may further involve processor 312 transmitting, via transceiver 316, the modulated and encoded data in the wireless network which comprises an EHT WLAN.

FIG. 5 illustrates an example process 500 in accordance with an implementation of the present disclosure. Process 500 may represent an aspect of implementing various proposed designs, concepts, schemes, systems and methods described above. More specifically, process 500 may represent an aspect of the proposed concepts and schemes pertaining to low PAPR duplicated dual carrier modulation for BPSK in wireless communications in accordance with the present disclosure. Process 500 may include one or more operations, actions, or functions as illustrated by one or more of blocks 510, 520 and 530. Although illustrated as discrete blocks, various blocks of process 500 may be divided into additional blocks, combined into fewer blocks, or eliminated, depending on the desired implementation. Moreover, the blocks/sub-blocks of process 500 may be executed in the order shown in FIG. 5 or, alternatively in a different order. Furthermore, one or more of the blocks/sub-blocks of process 500 may be executed repeatedly or iteratively. Process 500 may be implemented by or in apparatus 310 and apparatus 320 as well as any variations thereof. Solely for illustrative purposes and without limiting the scope, process 500 is described below in the context of apparatus 310 as communication entity 110 (e.g., a transmitting device whether a STA or an AP) and apparatus 320 as communication entity 120 (e.g., a receiving device whether a STA or an AP) of a wireless network such as a WLAN in accordance with one or more of IEEE 802.11 standards. Process 500 may begin at block 510.

At 510, process 500 may involve processor 312 of apparatus 310 generating DCM encoded data in a first half of a full signal bandwidth. Process 500 may proceed from 510 to 520.

At 520, process 500 may involve processor 312 duplicating, in a second half of the full signal bandwidth, the DCM encoded data generated in the first half of the full signal bandwidth. Process 500 may proceed from 520 to 530.

At 530, process 500 may involve processor 312 multiplying the duplicated DCM encoded data in the second half of the full signal bandwidth by a modulation vector to result in a reduced PAPR in transmission.

In some implementations, in generating the DCM encoded data, process 500 may involve processor 312 performing DCM encoding on a payload of the data on one or more subcarriers in a RU in the first half of the full signal bandwidth. In some implementations, in duplicating in the second half of the full signal bandwidth, process 500 may involve processor 312 duplicating the DCM encoded payload on one or more subcarriers in a second half of the full signal bandwidth.

In some implementations, process 500 may further involve processor 312 generating the modulation vector, M($k$), by: (i) setting M($k$) to -1 for k = [0 : $nfft$ / 4]; and (ii) setting M($k$) to 1 for k = [$nfft$ / 4 + 1 : $nfft$ / 2 - 1]. Here, $nfft$ may denote a length of IFFT, $k$ may denote an index of a respective one of the one or more subcarriers in the second half of the full signal bandwidth, the one or more subcarriers in each half of the full signal bandwidth may be numbered as [-$nfft$ / 2 : $nfft$ / 2 - 1], and the data may be encoded on subcarriers within [-$nfft$ / 2 : -1] and duplicated on subcarriers within [0 : $nfft$ / 2 - 1].

Alternatively, process 500 may further involve processor 312 generating the modulation vector, M($k$), by setting M($k$) = exp($k * j * \pi$).

In some implementations, process 500 may further involve processor 312 transmitting, via transceiver 316, an outcome of the multiplying in an EHT WLAN.

***Additional Notes***

The herein-described subject matter sometimes illustrates different components contained within, or connected with, different other components. It is to be understood that such depicted architectures are merely examples, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

Further, with respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

Moreover, it will be understood by those skilled in the art that, in general, terms used herein, and especially in the appended claims, e.g., bodies of the appended claims, are generally intended as "open" terms, e.g., the term "including" should be interpreted as "including but not limited to," the term "having" should be interpreted as "having at least," the term "includes" should be interpreted as "includes but is not limited to," etc. It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to implementations containing only one such recitation, even when the same claim includes the introductory phrases "one or more" or "at least one" and indefinite articles such as "a" or "an," e.g., "a" and/or "an" should be interpreted to mean "at least one" or "one or more;" the same holds true for the use of definite articles used to introduce claim recitations. In addition, even if a specific number of an introduced claim recitation is explicitly recited, those skilled in the art will recognize that such recitation should be interpreted to mean at least the recited number, e.g., the bare recitation of "two recitations," without other modifiers, means at least two recitations, or two or more recitations. Furthermore, in those instances where a convention analogous to "at least one of A, B, and C, etc." is used, in general such a construction is intended in the sense one having skill in the art would understand the convention, e.g., "a system having at least one of A, B, and C" would include but not be limited to systems that have A alone, B alone, C alone, A and B together, A and C together, B and C together, and/or A, B, and C together, etc. In those instances where a convention analogous to "at least one of A, B, or C, etc." is used, in general such a construction is intended in the sense one having skill in the art would understand the convention, e.g., "a system having at least one of A, B, or C" would include but not be limited to systems that have A alone, B alone, C alone, A and B together, A and C together, B and C together, and/or A, B, and C together, etc. It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

From the foregoing, it will be appreciated that various implementations of the present disclosure have been described herein for purposes of illustration, and that various modifications may be made without departing from the scope of the present disclosure. Accordingly, the various implementations disclosed herein are not intended to be limiting, with the true scope being indicated by the following claims.

## Claims

1. A method, comprising:

   encoding data using duplicated dual carrier modulation, in the following also referred to as DCM, 410); and
   modulating the encoded data to result in a reduced peak-to-average power ratio, in the following also referred to as PAPR, in transmission of the modulated and encoded data in a wireless network (420).

2. The method of Claim 1, wherein the encoding of the data using the duplicated DCM comprises:

   performing DCM encoding on a payload of the data on one or more subcarriers in a resource unit, in the following also referred to as RU, in a first half of a full signal bandwidth; and
   duplicating the DCM encoded payload on one or more subcarriers in a second half of the full signal bandwidth.

3. The method of Claim 2, wherein the modulating of the encoded data comprises multiplying the duplicated DCM encoded payload in the second half of the full signal bandwidth by a modulation vector.

4. The method of Claim 3, wherein the modulating of the encoded data further comprises generating the modulation vector, M($k$), by:

   setting M($k$) to -1 for $k$ = [0 : $nfft$ / 4]; and
   setting M($k$) to 1 for k = [$nfft$ / 4 + 1 : $nfft$ / 2 - 1],
   wherein $nfft$ denotes a length of Inverse Fast Fourier Transform, in the following also referred to as IFFT, and wherein k denotes an index of a respective one of the one or more subcarriers in the second half of the full signal bandwidth.

5. The method of Claim 3, wherein the modulating of the encoded data further comprises generating the modulation vector, M($k$), by setting M($k$) = exp($k * j * \pi$), and wherein k denotes an index of a respective one of the one or more subcarriers in the second half of the full signal bandwidth.

6. The method of Claim 5, wherein the one or more subcarriers in each half of the full signal bandwidth are numbered as [-*nfft* / 2 : *nfft* / 2 - 1], wherein the data is encoded on subcarriers within [*-nfft* / 2 : -1] and duplicated on subcarriers within [0 : *nfft* / 2 - 1], and wherein *nfft* denotes a length of IFFT.

7. The method of any one of Claims 1 to 6, further comprising:
transmitting the modulated and encoded data in the wireless network which comprises an extreme-high-throughput, in the following also referred to as EHT, wireless local area network, in the following also referred to as WLAN.

8. A method, comprising:

generating dual carrier modulation, in the following also referred to as DCM, encoded data in a first half of a full signal bandwidth (510);
duplicating in a second half of the full signal bandwidth the DCM encoded data generated in the first half of the full signal bandwidth (520); and
multiplying the duplicated DCM encoded data in the second half of the full signal bandwidth by a modulation vector to result in a reduced peak-to-average power ratio, in the following also referred to as PAPR, in transmission (530).

9. The method of Claim 8, wherein the generating of the DCM encoded data comprises performing DCM encoding on a payload of the data on one or more subcarriers in a resource unit, in the following also referred to as RU, in the first half of the full signal bandwidth, and wherein the duplicating in the second half of the full signal bandwidth comprises duplicating the DCM encoded payload on one or more subcarriers in a second half of the full signal bandwidth.

10. The method of Claim 8 or 9, further comprising:

generating the modulation vector, M($k$), by:

setting M($k$) to -1 for $k$ = [0 : *nfft* / 4]; and
setting M($k$) to 1 for k = [*nfft* / 4 + 1 : *nfft* / 2 - 1],

wherein *nfft* denotes a length of Inverse Fast Fourier Transform, in the following also referred to as IFFT, and wherein k denotes an index of a respective one of the one or more subcarriers in the second half of the full signal bandwidth.

11. The method of Claim 4 or 10, wherein the one or more subcarriers in each half of the full signal bandwidth are numbered as [*-nfft* / 2 : *nfft* / 2 - 1], and wherein the data is encoded on subcarriers within [*-nfft* / 2 : -1] and duplicated on subcarriers within [0 : *nfft* / 2 - 1].

12. The method of Claim 8 or 9, further comprising:

generating the modulation vector, M($k$), by setting M($k$) = exp($k * j * \pi$),
wherein k denotes an index of a respective one of the one or more subcarriers in the second half of the full signal bandwidth.

13. The method of Claim 12, wherein the one or more subcarriers in each half of the full signal bandwidth are numbered as [*-nfft* / 2 : *nfft* / 2 - 1], wherein the data is encoded on subcarriers within [*-nfft* / 2 : -1] and duplicated on subcarriers within [0 : *nfft* / 2 - 1], and wherein *nfft* denotes a length of IFFT.

14. The method of any one of Claims 8 to 13, further comprising:
transmitting an outcome of the multiplying in an extreme-high-throughput, in the following also referred to as EHT, wireless local area network, in the following also referred to as WLAN.

15. An apparatus, comprising:

a transceiver configured to communicate wirelessly; and
a processor coupled to the transceiver and configured to perform operations comprising the method steps as defined by any one of the preceding claims.

FIG. 1

**200** **(A)**

SUBCARRIER $K$             SUBCARRIER $K+N_{SD}/2$

**(B)**      GENERATION OF DUPLICATE DCM ENCODED DATA      MULTIPLICATION OF UPPER HALF BY MODULATION VECTOR

# FIG. 2

FIG. 3

400

ENCODE DATA USING DUPLICATED DUAL CARRIER
MODULATION (DCM)
410

MODULATE THE ENCODED DATA TO RESULT IN A
REDUCED PEAK-TO-AVERAGE POWER RATIO (PAPR) IN
TRANSMISSION OF THE MODULATED AND ENCODED DATA
IN A WIRELESS NETWORK
420

# FIG. 4

500 ⟍

```
┌─────────────────────────────────────────────┐
│  GENERATE DUAL CARRIER MODULATION (DCM)      │
│  ENCODED DATA IN A FIRST HALF OF A FULL SIGNAL│
│                BANDWIDTH                      │
│                   510                         │
└─────────────────────────────────────────────┘
```

```
┌─────────────────────────────────────────────┐
│  DUPLICATE IN A SECOND HALF OF THE FULL SIGNAL│
│  BANDWIDTH THE DCM ENCODED DATA GENERATED IN  │
│   THE FIRST HALF OF THE FULL SIGNAL BANDWIDTH │
│                   520                         │
└─────────────────────────────────────────────┘
```

```
┌─────────────────────────────────────────────┐
│  MULTIPLY THE DUPLICATED DCM ENCODED DATA IN  │
│ THE SECOND HALF OF THE FULL SIGNAL BANDWIDTH BY│
│   A MODULATION VECTOR TO RESULT IN A REDUCED  │
│     PEAK-TO-AVERAGE POWER RATIO (PAPR) IN     │
│                TRANSMISSION                    │
│                   530                         │
└─────────────────────────────────────────────┘
```

# FIG. 5

Europäisches
Patentamt

European
Patent Office

Office européen
des brevets

**EUROPEAN SEARCH REPORT**

Application Number

EP 21 18 4460

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 203 675 A1 (MEDIATEK INC [TW]) 9 August 2017 (2017-08-09) * paragraph [0007] - paragraph [0008] * * paragraph [0021] - paragraph [0024]; figure 3 * * figure 2 * * figure 4 * * figure 6 * * figure 7 * | 1-15 | INV. H04L27/26 H04B7/12 |
| X | JIANHAN LIU (MEDIATEK): "Reliable Transmission Schemes for HE-SIG-B and Data ; 11-15-1068-01-00ax-reliable-transmission-schemes-for-he-sig-b-and-data", IEEE DRAFT; 11-15-1068-01-00AX-RELIABLE-TRANSMISSION-SCHEMES-FOR-HE-SIG-B-AND-DATA, IEEE-SA MENTOR, PISCATAWAY, NJ USA, vol. 802.11ax, no. 1, 14 September 2015 (2015-09-14), pages 1-25, XP068098269, [retrieved on 2015-09-14] * page 11 - page 13 * | 1-15 | |
| X | Richard Van Nee: "5G Outlook- Innovations and Applications: Chapter 12 - 802.11ax for 5G" In: "5G Outlook - Innovations and Applications", 15 May 2016 (2016-05-15), River Publishers, DK, XP055383322, ISBN: 978-87-93379-78-7 pages 179-193, * page 190 * | 1-15 | TECHNICAL FIELDS SEARCHED (IPC) H04L H04B |

-/--

The present search report has been drawn up for all claims

| Place of search | Date of completion of the search | Examiner |
|---|---|---|
| Berlin | 16 November 2021 | Douglas, Ian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 21 18 4460

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2017/027479 A1 (NEWRACOM INC [US]) 16 February 2017 (2017-02-16) | 1-3,6-9, 11,13-15 | |
| A | * paragraph [0163] - paragraph [0164] * | 4,5,10, 12 | |
| | ----- | | |
| X | US 2017/295049 A1 (SUN YAKUN [US] ET AL) 12 October 2017 (2017-10-12) | 1-4, 6-11, 13-15 | |
| A | * paragraph [0016] * * paragraph [0059] - paragraph [0064] * | 5,12 | |
| | ----- | | |
| X | US 10 097 393 B1 (HUANG JIE [US] ET AL) 9 October 2018 (2018-10-09) * figure 3 * * figure 4a * * figure 4b * * figure 4c * * column 7, line 49 - column 10, line 7 * | 1-15 | |
| | ----- | | |

TECHNICAL FIELDS
SEARCHED      (IPC)

The present search report has been drawn up for all claims

| Place of search | Date of completion of the search | Examiner |
|---|---|---|
| Berlin | 16 November 2021 | Douglas, Ian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

......................................................................................

& : member of the same patent family, corresponding
    document

EPO FORM 1503 03.82 (P04C01)

## EP 3 937 448 A1

### ANNEX TO THE EUROPEAN SEARCH REPORT
### ON EUROPEAN PATENT APPLICATION NO.

EP 21 18 4460

This annex lists the patent family members relating to the patent documents cited in the above-mentioned European search report.
The members are as contained in the European Patent Office EDP file on
The European Patent Office is in no way liable for these particulars which are merely given for the purpose of information.

16-11-2021

| Patent document cited in search report | | | Publication date | Patent family member(s) | | | Publication date |
|---|---|---|---|---|---|---|---|
| EP 3203675 | A1 | | 09-08-2017 | EP | 3203675 | A1 | 09-08-2017 |
| | | | | US | 2017230220 | A1 | 10-08-2017 |
| WO 2017027479 | A1 | | 16-02-2017 | CN | 107925470 | A | 17-04-2018 |
| | | | | CN | 113037448 | A | 25-06-2021 |
| | | | | EP | 3332490 | A1 | 13-06-2018 |
| | | | | US | 2017041929 | A1 | 09-02-2017 |
| | | | | US | 2019312710 | A1 | 10-10-2019 |
| | | | | US | 2021176026 | A1 | 10-06-2021 |
| | | | | WO | 2017027479 | A1 | 16-02-2017 |
| US 2017295049 | A1 | | 12-10-2017 | CN | 109479041 | A | 15-03-2019 |
| | | | | EP | 3443717 | A1 | 20-02-2019 |
| | | | | US | 2017295049 | A1 | 12-10-2017 |
| | | | | WO | 2017180755 | A1 | 19-10-2017 |
| US 10097393 | B1 | | 09-10-2018 | US | 10097393 | B1 | 09-10-2018 |
| | | | | US | 10439854 | B1 | 08-10-2019 |
| | | | | US | 10735236 | B1 | 04-08-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63049718